# EUROPEAN PATENT APPLICATION

(11) **EP 4 832 079 A1**
(43) Date of publication of application: **28.10.2026**
(21) Application number: 24907837.9
(22) Date of filing: 25.11.2024
(51) Int. Cl.: H01M 4/36, H01M 4/525, H01M 4/505, H01M 4/131, H01M 10/052, C01G 53/00, H01M 4/02

(54) **BIMODAL POSITIVE ACTIVE MATERIAL, METHOD FOR PRODUCING SAME, AND ALL-SOLID-STATE BATTERIES COMPRISING SAME**

(30) Priority: 18.12.2023 KR 20230185142
(71) Applicant: POSCO Holdings Inc., Pohang-si, Gyeongsangbuk-do 37859 (KR)
(72) Inventor: MOON, Ji Woong, Pohang-si, Gyeongsangbuk-do 37859 (KR); NAM, Sang Cheol, Pohang-si, Gyeongsangbuk-do 37859 (KR); LEE, Jae Myung, Pohang-si, Gyeongsangbuk-do 37859 (KR); SONG, Jung Hoon, Pohang-si, Gyeongsangbuk-do 37859 (KR); PARK, Yooncheol, Pohang-si, Gyeongsangbuk-do 37859 (KR); PARK, Chi Rook, Pohang-si, Gyeongsangbuk-do 37859 (KR); LEE, Sung Yon, Pohang-si, Gyeongsangbuk-do 37859 (KR)
(74) Representative: Pfenning, Meinig & Partner mbB
(86) International application number: PCT/KR2024/018784
(87) International publication number: WO 2025/135552

(57) **Abstract**

One embodiment of the present invention provides a bimodal positive electrode active material including a first lithium metal oxide and a second lithium metal oxide, wherein an average particle diameter (D50) of the first lithium metal oxide is larger than an average particle diameter (D50) of the second lithium metal oxide, wherein the first lithium metal oxide includes a first coating layer coated on an entire surface or a portion of a surface thereof, wherein the second lithium metal oxide includes a second coating layer coated on an entire surface or a portion of a surface thereof, wherein the first coating layer and the second coating layer include a Zr-containing compound, an Nb-containing compound, or a combination thereof, and wherein the Zr-containing compound is represented by the following Chemical Formula 1 and the Nb-containing compound is represented by the following Chemical Formula 2.

[Chemical Formula 1] LiₓZr_{y}O_{z}

[Chemical Formula 2] LiₐNb_{b}O_{c}

In Chemical Formula 1, 0<x≤3, 0<y≤2, and 0<z≤4, and in Chemical Formula 2, 0<a≤3, 0<b≤2, and 0<c≤4.

## Description

### [TECHNICAL FIELD]

The present invention relates to a bimodal positive electrode active material, a method for manufacturing the same, and an all-solid-state battery including the same, and specifically, to a bimodal positive electrode active material having a medium particle size and a small particle size, a method for manufacturing the same, and an all-solid-state battery including the same.

### [BACKGROUND ART]

Today, secondary batteries are widely used from large devices such as automobiles and power storage systems to small devices such as mobile phones and notebook computers. As fields of application of secondary batteries expand, demand for improvement in battery safety and high performance is increasing.

Among secondary batteries, lithium secondary batteries have advantages of higher energy density and larger capacity per unit area than nickel-manganese batteries or nickel-cadmium batteries. However, since most electrolytes used in lithium secondary batteries are liquid electrolytes such as organic solvents, safety problems such as electrolyte leakage and fire risk caused thereby have emerged.

Accordingly, research on all-solid-state batteries has been actively conducted as a material for improving safety of conventional secondary batteries and increasing energy density. An all-solid-state battery refers to a battery in which a liquid electrolyte used in a conventional lithium secondary battery is replaced with a solid electrolyte. Since a flammable solvent is not used in the battery, ignition or explosion due to a reaction such as decomposition of a conventional electrolyte solution does not occur at all, and thus battery safety can be improved.

Accordingly, LiCoO₂ positive electrode active materials were widely used in the past, but recently, development has been directed toward high-nickel-based lithium nickel cobalt manganese oxides capable of achieving high capacity and having excellent price competitiveness.

In addition, for implementing high energy density, development of so-called bimodal positive electrode active materials capable of improving rolling density by mixing positive electrode active materials having a small particle size and a large particle size has been conducted.

However, high-nickel-based lithium metal oxide intrinsically has weak particle strength and low structural stability, and when an electrode is strongly rolled to further improve rolling density of a bimodal positive electrode active material, there is a problem in that capacity characteristics deteriorate due to collapse of the surface structure of the positive electrode active material.

Accordingly, there is a need to improve a problem in which capacity characteristics deteriorate when energy density per volume is improved in order to increase energy density of a bimodal positive electrode active material.

### [DETAILED DESCRIPTION OF THE INVENTION]

### [Technical Problem]

One object of the present invention is to provide an all-solid-state battery in which energy density per volume is improved while maintaining capacity by using a bimodal positive electrode active material coated with zirconium or niobium, as a bimodal lithium metal oxide containing a high content of nickel.

### [Technical Solution]

One embodiment of the present invention provides a bimodal positive electrode active material including a first lithium metal oxide and a second lithium metal oxide, wherein an average particle diameter (D50) of the first lithium metal oxide is larger than an average particle diameter (D50) of the second lithium metal oxide, wherein the first lithium metal oxide includes a first coating layer coated on an entire surface or a portion of a surface thereof, wherein the second lithium metal oxide includes a second coating layer coated on an entire surface or a portion of a surface thereof, wherein the first coating layer and the second coating layer include a Zr-containing compound, an Nb-containing compound, or a combination thereof, and wherein the Zr-containing compound is represented by the following Chemical Formula 1 and the Nb-containing compound is represented by the following Chemical Formula 2.

[Chemical Formula 1] LiₓZr_{y}O_{z}

[Chemical Formula 2] LiₐNb_{b}O_{c}

In Chemical Formula 1, 0<x≤3, 0<y≤2, and 0<z≤4, and in Chemical Formula 2, 0<a≤3, 0<b≤2, and 0<c≤4.

An electronic conductivity of the bimodal positive electrode active material may be 10 mS/cm to 50 mS/cm.

The average particle diameter (D50) of the first lithium metal oxide may be 7.0 µm to 8.0 µm, and the average particle diameter (D50) of the second lithium metal oxide may be 4.0 µm to 5.0 µm.

A weight ratio of the first lithium metal oxide to the second lithium metal oxide may be 90:10 to 60:40.

A content of a coating element of the first coating layer may be 0.1 wt% to 3.0 wt% based on a total weight of the first lithium metal oxide.

A content of a coating element of the second coating layer may be 0.1 wt% to 3.0 wt% based on a total weight of the second lithium metal oxide.

A thickness of the first coating layer may be 5 nm to 50 nm.

A thickness of the second coating layer may be 5 nm to 50 nm.

A content of nickel in the first lithium metal oxide and the second lithium metal oxide may be 80 mol% to 90 mol% based on a total number of moles of metals excluding lithium.

A pellet density of the bimodal positive electrode active material may be 3.0 g/cm³ to 3.7 g/cm³.

Another embodiment of the present invention provides a method for manufacturing a bimodal positive electrode active material, the method including: preparing a first metal hydroxide and a second metal hydroxide; forming a mixture including the first metal hydroxide or the second metal hydroxide and a lithium raw material; calcining the mixture to form a first lithium metal oxide or the second lithium metal oxide; forming a first coating layer containing a Zr-containing compound, an Nb-containing compound, or a combination thereof on an entire surface or a portion of a surface of the first lithium metal oxide; and forming a second coating layer containing a Zr-containing compound, an Nb-containing compound, or a combination thereof on an entire surface or a portion of a surface of the second lithium metal oxide, wherein the Zr-containing compound includes the following Chemical Formula 1, and the Nb-containing compound includes the following Chemical Formula 2, and wherein an average particle diameter (D50) of the first lithium metal oxide is larger than an average particle diameter (D50) of the second lithium metal oxide.

[Chemical Formula 1] LiₓZr_{y}O_{z}

[Chemical Formula 2] LiₐNb_{b}O_{c}

In Chemical Formula 1, 0<x≤3, 0<y≤2, and 0<z≤4, and in Chemical Formula 2, 0<a≤3, 0<b≤2, and 0<c≤4.

Still another embodiment of the present invention provides a positive electrode including the bimodal positive electrode active material for an all-solid-state battery.

Still another embodiment of the present invention provides an all-solid-state battery including a positive electrode, a negative electrode, and a solid electrolyte layer disposed therebetween, wherein the positive electrode includes the bimodal positive electrode active material for an all-solid-state battery.

### [Advantageous Effects]

The bimodal positive electrode active material according to one embodiment of the present invention includes lithium metal oxides having a medium particle size and a small particle size and containing a high content of nickel, and the surface of the positive electrode active material is coated with Zr or Nb to improve stability, whereby energy density per volume of an all-solid-state battery can be improved while maintaining capacity.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Bimodal Positive Electrode Active Material

A bimodal positive electrode active material according to one embodiment of the present invention includes a first lithium metal oxide and a second lithium metal oxide, wherein an average particle diameter (D50) of the first lithium metal oxide is larger than an average particle diameter (D50) of the second lithium metal oxide, wherein the first lithium metal oxide includes a first coating layer coated on an entire surface or a portion of a surface thereof, wherein the second lithium metal oxide includes a second coating layer coated on an entire surface or a portion of a surface thereof, wherein the first coating layer and the second coating layer include a Zr-containing compound, an Nb-containing compound, or a combination thereof, and wherein the Zr-containing compound is represented by the following Chemical Formula 1 and the Nb-containing compound is represented by the following Chemical Formula 2.

[Chemical Formula 1] LiₓZr_{y}O_{z}

[Chemical Formula 2] LiₐNb_{b}O_{c}

In Chemical Formula 1, 0<x≤3, 0<y≤2, and 0<z≤4, and in Chemical Formula 2, 0<a≤3, 0<b≤2, and 0<c≤4.

The Zr-containing compound may be represented by the above Chemical Formula 1 and the Nb-containing compound may be represented by the above Chemical Formula 2, but the present invention is not limited thereto, and any element capable of coating an entire surface or a portion of a surface of the first lithium metal oxide or the second metal oxide may be used.

In the bimodal positive electrode active material according to one embodiment of the present invention, the electronic conductivity of the bimodal positive electrode active material may be 10 mS/cm to 50 mS/cm, and specifically 20 mS/cm to 40 mS/cm. When the electronic conductivity of the bimodal positive electrode active material satisfies the above range, the first lithium metal oxide and the second lithium metal oxide are uniformly mixed, and electrical conductivity increases compared with a case in which a lithium metal oxide is used alone, whereby electrochemical characteristics of a lithium secondary battery can be improved. In contrast, when the electronic conductivity of the bimodal positive electrode active material is less than 10 mS/cm, contact nonuniformity between the two positive electrode active materials, namely the first lithium metal oxide and the second lithium metal oxide, may occur, and as a result, a phenomenon in which the discharge capacity of the positive electrode active material in an electrode decreases may occur. This phenomenon may occur more significantly particularly under a condition of high current density, that is, a large C-rate. In addition, when the electronic conductivity of the bimodal positive electrode active material exceeds 50 mS/cm, although the electronic conductivity of the bimodal positive electrode active material is increased, contact interfaces between the first lithium metal oxide and the second lithium metal oxide and the solid electrolyte may be insufficient, so that ion transfer between the positive electrode active material and the solid electrolyte becomes nonuniform, and as a result, a tendency of decreasing discharge capacity of the positive electrode active material may occur, and thermal stability may deteriorate. This phenomenon may occur more significantly particularly under a condition of high current density, that is, a large C-rate.

In the bimodal positive electrode active material according to one embodiment of the present invention, the average particle diameter (D50) of the first lithium metal oxide may include 7.0 µm to 8.0 µm, and specifically may be 7.3 µm to 8.0 µm, and the average particle diameter (D50) of the second lithium metal oxide may include 4.0 µm to 5.0 µm, and specifically may be 4.3 µm to 5.0 µm. When the average particle diameter (D50) of the first lithium metal oxide satisfies the above range, mixture density and surface stability are improved, and energy density per volume of an all-solid-state battery can be improved while maintaining capacity. In contrast, when the average particle diameter (D50) of the first lithium metal oxide is less than 7.0 µm, mixture density decreases and specific surface area increases, thereby increasing surface reactivity and lowering high-voltage stability, which may reduce lifespan of the battery. In addition, when the average particle diameter (D50) of the first lithium metal oxide exceeds 8.0 µm, the time required for Li ion diffusion becomes longer, and thus high-capacity and high-output characteristics may deteriorate, and deterioration of characteristics due to particle size may become pronounced.

When the average particle diameter of the second lithium metal oxide satisfies the above range, energy density per volume of an all-solid-state battery can be improved while maintaining capacity. In contrast, when the average particle diameter of the second lithium metal oxide is less than 4.0 µm, because the particles are small, handling becomes difficult and process efficiency decreases, and when configured as an electrode, the content of conductive carbon may need to be increased. In this case, a phenomenon in which carbon particles hinder contact between the solid electrolyte and the positive electrode active material and side reactions between the carbon and solid electrolyte material occur may reduce electrode energy density. In addition, when the average particle diameter of the second lithium metal oxide exceeds 5.0 µm, the particles are excessively large, so that small particles may be difficult to effectively position in spaces between medium particles, mixture density may decrease, and as the secondary particle size of the small particles increases, high-output characteristics may be hindered.

The weight ratio of the first lithium metal oxide to the second lithium metal oxide may be 90:10 to 60:40, and specifically may include a ratio range of 80:20 to 70:30. When the weight ratio of the first lithium metal oxide to the second lithium metal oxide satisfies the above range, the final packing density of the positive electrode active material can be increased, and thus capacity per volume can be increased. In contrast, when the small particle size of the second lithium metal oxide exceeds about 30% of the total weight of the medium particle size of the first lithium metal oxide and the small particle size of the second lithium metal oxide, the volume of small particles becomes larger than the spaces present between the medium particles, thereby lowering relative packing density of the electrode and lowering energy density per volume. In addition, when the small particle size of the second lithium metal oxide is less than about 10% of the total weight of the medium particle size of the first lithium metal oxide and the small particle size of the second lithium metal oxide, deviation between occupancy ratios of the medium particle size of the first lithium metal oxide and the small particle size of the second lithium metal oxide becomes severe, and the effect of improving electrochemical characteristics and stability of the bimodal positive electrode active material may be limited.

In the bimodal positive electrode active material according to one embodiment of the present invention, the content of the coating element of the first coating layer may be 0.1 wt% to 3.0 wt%, and specifically 0.3 wt% to 2.0 wt%, based on the total weight of the first lithium metal oxide. When the content of the coating element of the first coating layer satisfies the above range based on the total weight of the first lithium metal oxide, structural stability of the first lithium metal oxide can be increased, and when the positive electrode active material is used in a lithium secondary battery, high-temperature storage stability and lifespan characteristics of the positive electrode active material can be improved. In addition, the coating element may reduce residual lithium on the surface of the first lithium metal oxide and, at the same time, act as a lithium ion movement pathway, thereby affecting improvement of efficiency characteristics of the lithium secondary battery. In contrast, when the content of the coating element of the first coating layer is less than 0.1 wt% based on the total weight of the first lithium metal oxide, the entire surface or a portion of the first lithium metal oxide cannot be coated, and stability and lifespan characteristics of the positive electrode active material may deteriorate. In addition, when the content of the first coating element exceeds 3.0 wt% based on the total weight of the first lithium metal oxide, coating on the entire surface or a portion of the first lithium metal oxide becomes thick, so that resistance of the positive electrode active material is large, and it may be difficult to implement charge/discharge capacity of the positive electrode active material.

In the bimodal positive electrode active material according to one embodiment of the present invention, the content of the coating element of the second coating layer may be 0.2 wt% to 3.0 wt%, and specifically 0.3 wt% to 2.0 wt%, based on the total weight of the second lithium metal oxide. When the content of the coating element of the second coating layer satisfies the above range based on the total weight of the second lithium metal oxide, structural stability of the second lithium metal oxide can be increased, and when the positive electrode active material is used in a lithium secondary battery, high-temperature storage stability and lifespan characteristics of the positive electrode active material can be improved. In contrast, when the content of the coating element of the second coating layer is less than 0.2 wt% based on the total weight of the second lithium metal oxide, the entire surface or a portion of the second lithium metal oxide cannot be coated, and stability and lifespan characteristics of the positive electrode active material may deteriorate. In addition, when the content of the second coating element exceeds 3.0 wt% based on the total weight of the second lithium metal oxide, the coating element material remaining after coating the entire surface or a portion of the second lithium metal oxide acts as an impurity, and efficiency characteristics of the lithium secondary battery may deteriorate.

In the bimodal positive electrode active material according to one embodiment of the present invention, the thickness of the first coating layer may be 5 nm to 50 nm, and specifically 5 nm to 20 nm. When the thickness of the first coating layer satisfies the above range, structural stability of the first lithium metal oxide is improved, and electrochemical characteristics can be excellent. In contrast, when the thickness of the first coating layer is less than 5 nm, electrochemical characteristics and stability of the first lithium metal oxide may deteriorate. In addition, when the thickness of the first coating layer exceeds 50 nm, an occupancy ratio of the first coating layer on the surface of the first lithium metal oxide becomes excessively large, so that resistance of the positive electrode active material may deviate from surface characteristics of the first lithium metal oxide, and electrochemical characteristics and stability of the positive electrode active material may deteriorate.

In the bimodal positive electrode active material according to one embodiment of the present invention, the thickness of the second coating layer may be 5 nm to 50 nm, and specifically 10 nm to 20 nm. When the thickness of the second coating layer satisfies the above range, structural stability of the second lithium metal oxide is improved, and electrochemical characteristics can be excellent. In contrast, when the thickness of the second coating layer is less than 5 nm, electrochemical characteristics and stability of the first lithium metal oxide may deteriorate. In addition, when the thickness of the second coating layer exceeds 50 nm, an occupancy ratio of the second coating layer on the surface of the second lithium metal oxide becomes excessively large, so that deviation from surface characteristics of the second lithium metal oxide may occur, and electrochemical characteristics and stability of the positive electrode active material may deteriorate.

In the bimodal positive electrode active material according to one embodiment of the present invention, the nickel content of the first lithium metal oxide and the second lithium metal oxide may be 80 mol% to 90 mol% based on the total number of moles of metals excluding lithium. When the nickel content satisfies the above range, energy density of a battery increases, so that a driving distance per charge of an electric vehicle can be increased and an electric vehicle having higher output can be manufactured. In addition, nickel has an advantage of producing strong energy instantaneously due to high energy density, and may have price competitiveness compared with other metals.

In the bimodal positive electrode active material according to one embodiment of the present invention, the pellet density of the bimodal positive electrode active material may be 3.0 g/cm³ to 3.7 g/cm³, and specifically 3.5 g/cm³ to 3.6 g/cm³. When the pellet density of the bimodal positive electrode active material satisfies the above range, there may be an advantage in that energy density per unit volume increases. In contrast, when the pellet density of the bimodal positive electrode active material is less than 3.0 g/cm³, energy density per unit volume may be low. In addition, when the pellet density exceeds 3.7 g/cm³, an absolute amount of a contact interface between the positive electrode active material and the solid electrolyte decreases, resistance increases, and discharge capacity decreases.

### 2. Method for Manufacturing Bimodal Positive Electrode Active Material

A method for manufacturing a bimodal positive electrode active material according to another embodiment of the present invention includes: preparing a first metal hydroxide and a second metal hydroxide; forming a mixture including the first metal hydroxide or the second metal hydroxide and a lithium raw material; calcining the mixture to form a first lithium metal oxide or the second lithium metal oxide; forming a first coating layer containing a Zr-containing compound, an Nb-containing compound, or a combination thereof on an entire surface or a portion of a surface of the first lithium metal oxide; and forming a second coating layer containing a Zr-containing compound, an Nb-containing compound, or a combination thereof on an entire surface or a portion of a surface of the second lithium metal oxide, wherein the Zr-containing compound includes the following Chemical Formula 1, and the Nb-containing compound includes the following Chemical Formula 2, and wherein an average particle diameter (D50) of the first lithium metal oxide is larger than an average particle diameter (D50) of the second lithium metal oxide.

[Chemical Formula 1] LiₓZr_{y}O_{z}

[Chemical Formula 2] LiₐNb_{b}O_{c}

In Chemical Formula 1, 0<x≤3, 0<y≤2, and 0<z≤4, and in Chemical Formula 2, 0<a≤3, 0<b≤2, and 0<c≤4.

Hereinafter, the method for manufacturing a bimodal positive electrode active material according to another embodiment of the present invention will be described in detail step by step.

First, the first metal hydroxide and the second metal hydroxide in the step of preparing the first metal hydroxide and the second metal hydroxide are precursors of a positive electrode active material. The positive electrode active material precursor may be secondary particles formed by aggregation of primary particles.

The transition metal hydroxide may be prepared, for example, by introducing an ammonia solution and a caustic soda solution into a transition metal-containing solution including a nickel raw material, a cobalt raw material, a manganese raw material, and a doping raw material including Al, Mg, Ti, Nb, W, Sc, Zr, Si, V, Fe, Y, Mo, or a combination thereof, to perform a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, or oxyhydroxide, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a fatty acid nickel salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, or oxyhydroxide, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate, manganese citrate, a manganese salt such as a fatty acid manganese salt, a manganese oxide such as Mn₂O₃, MnO₂, and Mn₃O₄, oxyhydroxide, manganese chloride, or a combination thereof, but is not limited thereto.

The transition metal-containing solution may be prepared by adding the raw materials to a solvent, specifically water or a mixed solvent of water and an organic solvent uniformly miscible with water, for example, alcohol or the like, or may be prepared by mixing aqueous solutions each containing the respective raw materials.

The ammonia solution is a complexing agent, and may include, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the ammonia solution may be used in the form of an aqueous solution, and in this case, water, or a mixture of water and an organic solvent uniformly miscible with water, specifically alcohol or the like, may be used as a solvent.

The caustic soda solution is a precipitant or pH adjusting agent, and may include an alkali compound such as a hydroxide of an alkali metal or alkaline earth metal, such as NaOH, KOH, or Ca(OH)₂, a hydrate thereof, or a combination thereof. The caustic soda solution may also be used in the form of an aqueous solution, and in this case, water, or a mixture of water and an organic solvent uniformly miscible with water, specifically alcohol or the like, may be used as a solvent.

The coprecipitation reaction may be performed under an inert atmosphere such as nitrogen or argon.

Next, a mixture including the first metal hydroxide or the second metal hydroxide and a lithium raw material may be formed.

As the lithium raw material, a lithium-containing sulfate, nitrate, acetate, carbonate, oxalate, citrate, halide, hydroxide, or oxyhydroxide may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The mixture may further include a doping raw material including Al, Mg, Ti, Nb, W, Sc, Zr, Si, V, Fe, Y, Mo, or a combination thereof.

Next, the mixture may be calcined to form the first lithium metal oxide or the second lithium metal oxide.

The average particle diameter (D50) of the first lithium metal oxide may include 7.0 µm to 8.0 µm, and specifically may be 7.3 µm to 8.0 µm, and the average particle diameter (D50) of the second lithium metal oxide may include 4.0 µm to 5.0 µm, and specifically may be 4.3 µm to 5.0 µm. Accordingly, the average particle diameter (D50) of the positive electrode active material can be easily obtained within a target range.

At this time, the calcination may be performed at a maximum temperature of 700°C to 800°C. When the calcination temperature satisfies the above range, there is an advantage in that an optimal crystal grain size can be secured.

The calcination may be performed in an oxygen atmosphere.

A holding time at the maximum temperature during the calcination time may be 3 hours to 24 hours, and more specifically 5 hours to 15 hours.

Next, the method may include forming a first coating layer containing a Zr-containing compound, an Nb-containing compound, or a combination thereof on an entire surface or a portion of a surface of the first lithium metal oxide and forming a second coating layer containing a Zr-containing compound, an Nb-containing compound, or a combination thereof on an entire surface or a portion of a surface of the second lithium metal oxide. Since the Zr and Nb compounds are as described above, a detailed description thereof will be omitted.

Meanwhile, a method for forming the coating layer is not particularly limited. For example, the coating layer may be formed by spraying a coating solution containing a coating raw material onto a surface of the first lithium metal oxide or the second lithium metal oxide, and then heat-treating and drying the same, but is not limited thereto, and any method available in the art may be used without limitation.

### 3. All-Solid-State Battery

Still another embodiment of the present invention provides a positive electrode including the above-described bimodal positive electrode active material for an all-solid-state battery.

More specifically, the positive electrode may include a positive electrode current collector and a positive electrode active material layer disposed on the positive electrode current collector, and the positive electrode active material layer may include the above-described positive electrode active material for an all-solid-state battery, a sulfide-based solid electrolyte, and a conductive material. In addition, the positive electrode active material layer may further include a binder.

At this time, the sulfide-based solid electrolyte may be, for example, a sulfide-based solid electrolyte having an argyrodite-based crystal structure.

The sulfide-based solid electrolyte having an argyrodite-based crystal structure may be, for example, Li₆PS₅Cl, Li₆PS₅Br, Li₆PS₅I, or a combination thereof, but is not limited thereto.

At least a portion of the crystal structure of the sulfide-based solid electrolyte having an argyrodite-based crystal structure may be doped with a doping element.

The conductive material may be, for example, graphite, carbon black, acetylene black, Ketjen black, carbon nanofibers, carbon nanotubes, or a combination thereof.

The binder may be, for example, polyvinylidene fluoride, styrene-butadiene rubber (SBR), polytetrafluoroethylene, polyvinylidene fluoride, a vinylidene fluoride/hexafluoropropylene copolymer, polyacrylonitrile, polymethyl methacrylate, or a combination thereof.

The positive electrode active material layer may further include additives such as a filler, a coating agent, a dispersant, and an ion conductive aid, in addition to the above-described positive electrode active material, solid electrolyte, binder, and conductive material.

Still another embodiment of the present invention provides an all-solid-state battery including a positive electrode, a negative electrode, and a solid electrolyte layer disposed therebetween, wherein the positive electrode includes the above-described positive electrode active material for an all-solid-state battery.

A description of the positive electrode is the same as described above and thus will be omitted.

The solid electrolyte layer may include a sulfide-based solid electrolyte.

The sulfide-based solid electrolyte may be, for example, an argyrodite-type compound including at least one selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. In particular, the sulfide-based solid electrolyte may be an argyrodite-type compound including at least one selected from Li₆PS₅Cl, Li₆PS₅Br, and Li₆PS₅I. However, the present invention is not limited thereto.

At least a portion of the crystal structure of the above-described argyrodite-type compound of the sulfide-based solid electrolyte may be doped with a doping element.

The solid electrolyte layer may further include a binder. The binder included in the solid electrolyte layer may be, for example, styrene-butadiene rubber (SBR), polytetrafluoroethylene, polyvinylidene fluoride, polyethylene, or the like, but is not limited thereto, and any material used as a binder in the art may be used. The binder of the solid electrolyte layer may be the same as or different from binders included in the positive electrode active material layer and the negative electrode active material layer.

The negative electrode may include a negative electrode current collector and a negative electrode active material layer disposed on the negative electrode current collector, and the negative electrode active material layer may include a negative electrode active material.

The negative electrode active material includes a material capable of reversible intercalation/deintercalation of lithium ions, lithium metal, an alloy of lithium metal, a material capable of doping and dedoping lithium, or a transition metal oxide.

As the material capable of reversible intercalation/deintercalation of lithium ions, a carbon material may be used, and any carbon-based negative electrode active material generally used in lithium ion secondary batteries may be used. Representative examples thereof may include crystalline carbon, amorphous carbon, or a combination thereof. Examples of the crystalline carbon may include graphite such as amorphous, plate-like, flake-like, spherical, or fibrous natural graphite or artificial graphite, and examples of the amorphous carbon may include soft carbon (low-temperature calcined carbon), hard carbon, mesophase pitch carbide, calcined coke, and the like.

As the alloy of lithium metal, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, Si, SiOₓ (0<x<2), a Si-Y alloy, wherein Y is an element selected from the group consisting of alkali metals, alkaline earth metals, Group 13 elements, Group 14 elements, transition metals, rare earth elements, and combinations thereof, and is not Si, Sn, SnO₂, Sn-Y, wherein Y is an element selected from the group consisting of alkali metals, alkaline earth metals, Group 13 elements, Group 14 elements, transition metals, rare earth elements, and combinations thereof, and is not Sn, and the like may be used, and at least one thereof may also be mixed with SiO₂ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

Examples of the transition metal oxide may include vanadium oxide, lithium vanadium oxide, and the like.

The negative electrode active material layer may also include a binder and may optionally further include a conductive material.

The binder serves to suitably attach negative electrode active material particles to each other and also to suitably attach the negative electrode active material to a current collector, and representative examples thereof may include polyvinyl alcohol, carboxymethyl cellulose, hydroxypropyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, but are not limited thereto.

The conductive material is used to impart conductivity to the electrode, and any electron conductive material may be used as long as it does not cause a chemical change in the battery to be configured. Examples thereof may include carbon-based materials such as natural graphite, artificial graphite, carbon black, acetylene black, Ketjen black, and carbon fibers; metal-based materials such as metal powder or metal fibers such as copper, nickel, aluminum, and silver; conductive polymer materials such as polyphenylene derivatives; or conductive materials including mixtures thereof.

As the current collector, a material selected from the group consisting of copper foil, nickel foil, stainless steel foil, titanium foil, nickel foam, copper foam, a polymer substrate coated with a conductive metal, and combinations thereof may be used.

### [MODE FOR CARRYING OUT THE INVENTION]

Hereinafter, embodiments of the present invention will be described in more detail through Examples. However, the following Examples are only preferred embodiments of the present invention, and the present invention is not limited by the following Examples.

### Example 1: Method for Manufacturing Bimodal Positive Electrode Active Material

### (1) Method for Manufacturing Medium Particle Size

A Ni₀.₈₃Co₀.₁₂Mn₀.₀₅(OH)₂ metal hydroxide precursor having an average particle diameter (D50) of 6 µm to 7 µm and LiOH·H₂O as a lithium raw material were mixed at a molar ratio of 1:1.05 to form a mixture. 1 kg of the mixture was charged into a tube furnace, and the temperature was raised at a temperature increase rate of 2.5°C/min. A calcination temperature was maintained at 750°C, and a holding time was maintained for 10 hours, followed by cooling at a cooling rate of 2.5°C/min. During the calcination, pure O₂ was supplied such that an O₂ concentration of 99% or more could be maintained, thereby forming a first lithium metal oxide, LiNi₀.₈₃Co₀.₁₂Mn₀.₀₅O₂, having an average particle diameter (D50) of 7 µm to 8 µm.

For the first coating layer coated on the entire surface or a portion of the surface of the first lithium metal oxide, the first lithium metal oxide was dissolved in dehydrated ethanol, and zirconium(IV) tetrapropoxide (70 wt% in 1-propanol) was added in an amount such that the molar ratio of first lithium metal oxide:zirconium ions became 2:1, followed by stirring to prepare a coating solution containing lithium ions and zirconium ions. At this time, the concentration of zirconium ions in the coating solution was 0.1 mol/L.

400 mL of the first coating solution was sprayed onto 1 kg of the formed first lithium metal oxide using a fluidized coating apparatus (MP-01, POWREX) to perform a coating process. The operating conditions of the fluidized coating apparatus were an intake gas (nitrogen), an intake gas temperature (80°C), an intake air volume (0.3 m³/h), a rotation speed (400 rpm), and a coating solution spray rate (10 mL/min), and spraying was performed for a total of 40 minutes. Thereafter, the lithium transition metal oxide onto which the first coating solution was sprayed was charged into a Saggar, and heat-treated at 300°C while oxygen was supplied to a box-type electric furnace, thereby manufacturing a positive electrode active material in which an amorphous Li₂ZrO₃ coating layer was formed on the surface of the lithium transition metal oxide.

### (2) Method for Manufacturing Small Particle Size

A Ni₀.₈₃Co₀.₁₂Mn₀.₀₅(OH)₂ transition metal hydroxide precursor having an average particle diameter of 4 µm and LiOH·H₂O as a lithium raw material were mixed at a molar ratio of 1:1.05 to form a mixture. 1 kg of the mixture was charged into a tube furnace, and the temperature was raised at a temperature increase rate of 2.5°C/min. A calcination temperature was maintained at 750°C, and a holding time was maintained for 10 hours, followed by cooling at a cooling rate of 2.5°C/min. During the calcination, pure O₂ was supplied such that an O₂ concentration of 99% or more could be maintained, thereby forming a second lithium transition metal oxide, LiNi₀.₈₃Co₀.₁₂Mn₀.₀₅O₂, having an average particle diameter (D50) of 5 µm.

For the first coating layer coated on the entire surface or a portion of the surface of the second lithium metal oxide, the second lithium metal oxide was dissolved in dehydrated ethanol, and zirconium(IV) tetrapropoxide (70 wt% in 1-propanol) was added in an amount such that the molar ratio of second lithium metal oxide:zirconium ions became 2:1, followed by stirring to prepare a coating solution containing lithium ions and zirconium ions. At this time, the concentration of zirconium ions in the coating solution was 0.1 mol/L.

400 mL of the second coating solution was sprayed onto 1 kg of the formed second lithium metal oxide using a fluidized coating apparatus (MP-01, POWREX) to perform a coating process. The operating conditions of the fluidized coating apparatus were an intake gas (nitrogen), an intake gas temperature (80°C), an intake air volume (0.3 m³/h), a rotation speed (400 rpm), and a coating solution spray rate (10 mL/min), and spraying was performed for a total of 40 minutes. Thereafter, the lithium transition metal oxide onto which the second coating solution was sprayed was charged into a Saggar, and heat-treated at 300°C while oxygen was supplied to a box-type electric furnace, thereby manufacturing a positive electrode active material in which an amorphous Li₂ZrO₃ coating layer was formed on the surface of the lithium transition metal oxide.

### (3) Method for Manufacturing Bimodal Positive Electrode Active Material

70 wt% of the first lithium transition metal oxide LiNi₀.₈₃Co₀.₁₂Mn₀.₀₅O₂ coated with the first coating layer on the entire surface or a portion of the surface thereof and 30 wt% of the second lithium transition metal oxide LiNi₀.₈₃Co₀.₁₂Mn₀.₀₅O₂ coated with the second coating layer on the entire surface or a portion of the surface thereof were mixed with a mixer for 30 minutes to manufacture a bimodal positive electrode material.

### (4) Method for Manufacturing All-Solid-State Battery

75 wt% of the manufactured bimodal positive electrode active material, 22 wt% of an argyrodite solid electrolyte (Li₆PS₅Cl), and 3 wt% of Super C65 as a conductive material were mixed well with a solvent in which a small amount of binder was dissolved to prepare a mixed paste. A positive electrode plate was manufactured using the mixed paste and dried to manufacture a composite electrode plate for a positive electrode. 100 mg of an argyrodite solid electrolyte (Li₆PS₅Cl), which functions as a separator, was first charged into a jig for evaluation of an all-solid-state battery and pressed at 300 MPa or more to have a thickness of about 800 µm. Then, a positive electrode plate was inserted on one side, and secondary pressing was performed to manufacture a positive electrode portion. Thereafter, a Li-In alloy was inserted on the other side, and an appropriate pressure was applied to manufacture a battery for evaluation of an all-solid-state battery.

### Comparative Example 1: Method for Manufacturing Positive Electrode Active Material

### (1) Method for Manufacturing Medium Particle Size

A Ni₀.₈₃Co₀.₁₂Mn₀.₀₅(OH)₂ metal hydroxide precursor having an average particle diameter of 6 µm to 7 µm and LiOH·H₂O as a lithium raw material were mixed at a molar ratio of 1:1.05 to form a mixture. 1 kg of the mixture was charged into a tube furnace, and the temperature was raised at a temperature increase rate of 2.5°C/min. A calcination temperature was maintained at 750°C, and a holding time was maintained for 10 hours, followed by cooling at a cooling rate of 2.5°C/min. During the calcination, pure O₂ was supplied such that an O₂ concentration of 99% or more could be maintained, thereby forming a first lithium metal oxide, LiNi₀.₈₃Co₀.₁₂Mn₀.₀₅O₂, having an average particle diameter (D50) of 7 µm to 8 µm, and coating of the first lithium metal oxide was performed in the same manner as in Example 1.

### (2) Method for Manufacturing Small Particle Size

A Ni₀.₈₃Co₀.₁₂Mn₀.₀₅(OH)₂ metal hydroxide precursor having an average particle diameter of 4 µm and LiOH·H₂O as a lithium raw material were mixed at a molar ratio of 1:1.05 to form a mixture.

1 kg of the mixture was charged into a tube furnace, and the temperature was raised at a temperature increase rate of 2.5°C/min. A calcination temperature was maintained at 750°C, and a holding time was maintained for 10 hours, followed by cooling at a cooling rate of 2.5°C/min. During the calcination, pure O₂ was supplied such that an O₂ concentration of 99% or more could be maintained, thereby forming a second lithium metal oxide, LiNi₀.₈₃Co₀.₁₂Mn₀.₀₅O₂, having an average particle diameter (D50) of 5 µm, and coating of the second lithium metal oxide was performed in the same manner as in Example 1.

### Experimental Example 1: Evaluation of Particle Size of Bimodal Positive Electrode Active Material

The average particle diameter (D50) of the positive electrode active material used in the Examples and Comparative Examples was analyzed using a Horiba LA-960V2 particle size analyzer while the positive electrode active material powder was dispersed in distilled water and a dispersed state was suitably maintained using an ultrasonic vibrator built into the particle size analyzer.

### Experimental Example 2: Evaluation of Electrochemical Characteristics of All-Solid-State Battery

### (1) Evaluation of Initial Capacity and Initial Efficiency

After lithium secondary battery half cells were manufactured and aged at 30°C for 4 hours, a charge/discharge test was performed at 30°C. For initial capacity evaluation, 200 mAh/g was used as a reference capacity, and charging was performed to 3.63 V at a constant current of 0.1 C, followed by switching to constant voltage, and charging was continued until the end current reached 0.05 C. After charging, a rest time of 10 minutes was provided, and discharge was performed to 1.9 V at a constant current of 0.1 C based on a reference capacity of 200 mAh/g.

### (2) Evaluation of Lifespan Characteristics (30°C, 60 Cycles)

After lithium secondary battery half cells were manufactured, charging was performed at 30°C to 3.63 V at a constant current of 0.5 C, followed by switching to constant voltage, and charging was performed until the end current reached 0.1 C. After charging, a rest time of 10 minutes was provided, and discharge was performed to 1.9 V at a constant current of 0.5 C. Charging and discharging were performed 30 times under such charge/discharge cycle conditions, and a capacity retention rate of the 30th cycle relative to the first cycle was calculated.

**[Table 1]**

| | | Nickel Composition (%) | Particle Size (µm) | Initial Capacity (mAh/g) | High cycle (0.5C/0.1C) | Retention (%) |
|---|---|---|---|---|---|---|
| Comparative Example 1 | Medium particle size | 83 | 7.5 | 202.2 | 90.2 | 99.1 |
| Comparative Example 2 | Small particle size | 83 | 4.0 to 5.0 | 214.0 | 91.8 | 99.1 |
| Example 1 | Bimodal | 83 | | 214.0 | 94.5 | 99.1 |

Referring to Table 1, the initial capacity of the bimodal positive electrode active material of Example 1 was superior to the initial capacity of the medium particle size of Comparative Example 1, but there was no large difference from the initial capacity of the small particle size of Comparative Example 2. However, when examining the cycle performance (0.5C/0.1C) results of Example 1 and Comparative Examples 1 and 2, it was confirmed that the cycle performance of the bimodal positive electrode active material of Example 1 was superior to those of Comparative Examples 1 and 2. Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A bimodal positive electrode active material, comprising:
a first lithium metal oxide and a second lithium metal oxide,
wherein an average particle diameter (D50) of the first lithium metal oxide is larger than an average particle diameter (D50) of the second lithium metal oxide,
wherein the first lithium metal oxide comprises a first coating layer coated on an entire surface or a portion of a surface thereof,
wherein the second lithium metal oxide comprises a second coating layer coated on an entire surface or a portion of a surface thereof,
wherein the first coating layer and the second coating layer comprise a Zr-containing compound, an Nb-containing compound, or a combination thereof, and
wherein the Zr-containing compound is represented by the following Chemical Formula 1 and the Nb-containing compound is represented by the following Chemical Formula 2:
[Chemical Formula 1] LiₓZr_{y}O_{z}
[Chemical Formula 2] LiₐNb_{b}O_{c}
wherein, in Chemical Formula 1, 0<x≤3, 0<y≤2, and 0<z≤4, and in Chemical Formula 2, 0<a≤3, 0<b≤2, and 0<c≤4.

2. The bimodal positive electrode active material of claim 1,
wherein an electronic conductivity of the bimodal positive electrode active material is 10 mS/cm to 50 mS/cm.

3. The bimodal positive electrode active material of claim 1,
wherein the average particle diameter (D50) of the first lithium metal oxide is 7.0 µm to 8.0 µm, and the average particle diameter (D50) of the second lithium metal oxide is 4.0 µm to 5.0 µm.

4. The bimodal positive electrode active material of claim 1,
wherein a weight ratio of the first lithium metal oxide to the second lithium metal oxide is 90:10 to 60:40.

5. The bimodal positive electrode active material of claim 1,
wherein a content of a coating element of the first coating layer is 0.1 wt% to 3.0 wt% based on a total weight of the first lithium metal oxide.

6. The bimodal positive electrode active material of claim 1,
wherein a content of a coating element of the second coating layer is 0.1 wt% to 3.0 wt% based on a total weight of the second lithium metal oxide.

7. The bimodal positive electrode active material of claim 1,
wherein a thickness of the first coating layer is 5 nm to 50 nm.

8. The bimodal positive electrode active material of claim 1,
wherein a thickness of the second coating layer is 5 nm to 50 nm.

9. The bimodal positive electrode active material of claim 1,
wherein a content of nickel in the first lithium metal oxide and the second lithium metal oxide is 80 mol% to 90 mol% based on a total number of moles of metals excluding lithium.

10. The bimodal positive electrode active material of claim 1,
wherein a pellet density of the bimodal positive electrode active material is 3.0 g/cm³ to 3.7 g/cm³.

11. A method for manufacturing a bimodal positive electrode active material, comprising:
preparing a first metal hydroxide and a second metal hydroxide;
forming a mixture comprising the first metal hydroxide or the second metal hydroxide and a lithium raw material;
calcining the mixture to form a first lithium metal oxide or the second lithium metal oxide;
forming a first coating layer containing a Zr-containing compound, an Nb-containing compound, or a combination thereof on an entire surface or a portion of a surface of the first lithium metal oxide; and
forming a second coating layer containing a Zr-containing compound, an Nb-containing compound, or a combination thereof on an entire surface or a portion of a surface of the second lithium metal oxide,
wherein the Zr-containing compound comprises the following Chemical Formula 1, and the Nb-containing compound comprises the following Chemical Formula 2, and
wherein an average particle diameter (D50) of the first lithium metal oxide is larger than an average particle diameter (D50) of the second lithium metal oxide:
[Chemical Formula 1] LiₓZr_{y}O_{z}
[Chemical Formula 2] LiₐNb_{b}O_{c}
wherein, in Chemical Formula 1, 0<x≤3, 0<y≤2, and 0<z≤4, and in Chemical Formula 2, 0<a≤3, 0<b≤2, and 0<c≤4.

12. A positive electrode comprising the bimodal positive electrode active material of any one of claims 1 to 10.

13. An all-solid-state battery comprising:
a positive electrode;
a negative electrode; and
a solid electrolyte layer disposed therebetween,
wherein the positive electrode comprises the bimodal positive electrode active material of any one of claims 1 to 10.
